# DEMANDE DE BREVET EUROPEEN

(11) **EP 3 272 584 A1**
(43) Date de publication de la demande: **24.01.2018**
(21) Numéro de dépôt: 17179554.5
(22) Date de dépôt: 04.07.2017
(51) Int. Cl.: B60Q 1/26, B60Q 1/04

(54) **DISPOSITIF D'INDEXATION D'UN DISPOSITIF D'ECLAIRAGE ET/OU DE SIGNALISATION LUMINEUSE D'UN VEHICULE AUTOMOBILE**

(30) Priorité: 21.07.2016 FR 1656989
(71) Demandeur: PSA Automobiles SA, 78300 Poissy (FR)
(72) Inventeur: PERON, Rodolphe, 95220 Herblay (FR)

(57) **Abrégé**

L'invention porte sur un dispositif lumineuse d'un véhicule, ledit véhicule présentant un avant, un arrière, deux côtés, une carrosserie dont une partie de carrosserie latérale sur les deux côtés, ledit dispositif comprenant un boîtier et au moins une glace de feu (21, 22), ladite glace de feu (21, 22) s'étendant au-delà des limites du boîtier pour recouvrir directement une portion de carrosserie latérale, en l'absence de toute partie du boîtier en vis-à-vis de ladite portion de carrosserie latérale, ladite glace de feu (21, 22) comprenant, surmoulé dans ladite glace de feu, un index (10), de façon à ce que ladite glace de feu (21, 22) et ledit index (10) forment un ensemble monobloc, ledit index (10) présentant une base (11) noyée dans la masse de la glace de feu (21, 22) et une partie de fixation (12) émergeant de la glace de feu (21, 22), de telle façon que ledit index (10) se trouve en vis-à-vis de ladite portion de carrosserie latérale, ledit index (10) étant configuré pour que la partie de fixation (12) coopère avec un moyen correspondant, tel qu'un trou, aménagé dans ladite portion de carrosserie latérale, pour assurer la fixation de la glace de feu (21, 22) et du dispositif sur la carrosserie du véhicule.

## Description

L'invention concerne les dispositifs d'éclairage et/ou de signalisation lumineuse, destinés plus particulièrement aux véhicules automobiles. L'invention porte plus précisément sur un dispositif d'éclairage et/ou de signalisation lumineuse, notamment un dispositif de signalisation lumineuse, adapté pour permettre sa fixation sur une carrosserie de véhicule, sans boîtier. En pratique, la présente invention vise à permettre l'indexation d'un dispositif de signalisation lumineuse sur le côté d'un véhicule, dans une portion de carrosserie emboutie sur une faible profondeur ne permettant pas la présence d'un boîtier.

De manière connue, des dispositifs d'éclairage et/ou de signalisation lumineuse sont disposés à l'avant et à l'arrière d'un véhicule automobile afin, d'une part, d'éclairer la route pour améliorer la visibilité du conducteur du véhicule, notamment en condition nocturne, et, d'autre part, de signaler la position du véhicule aux autres usagers de la route. En pratique, un dispositif d'éclairage et/ou de signalisation lumineuse avant ou arrière comprend principalement les feux de position, les feux de croisement et les feux de route dont les différentes intensités lumineuses permettent d'adapter l'éclairage aux conditions extérieures. Pour ce faire, un dispositif d'éclairage et/ou de signalisation lumineuse avant comprend une pluralité de sources lumineuses pouvant être actionnées afin d'activer les différents feux.

De manière classique, les différentes sources lumineuses se présentent sous la forme d'une pluralité d'ampoules à incandescence halogène ou de diodes électroluminescentes, également désignées DEL ou LED pour Light-Emitting Diode en langue anglaise, montées à l'intérieur d'un boîtier dont la face avant est fermée de manière étanche par une paroi réalisée à partir d'une résine transparente et résistante aux chocs afin de permettre à la lumière émise par les sources de lumières d'être orientée vers l'avant ou l'arrière du véhicule. Une telle face avant, également désignée sous le terme de « glace de feu », a pour fonction de protéger les sources de lumières des conditions extérieures, notamment de la pluie ou de tout objet projeté vers le véhicule et pouvant endommager lesdites sources de lumière.

Comme brièvement indiqué précédemment, la présente invention vise l'indexation d'un dispositif d'éclairage et/ou de signalisation lumineuse sur le côté d'habitacle d'un véhicule. La difficulté de l'indexation d'un dispositif d'éclairage et/ou de signalisation lumineuse sur le côté d'habitacle d'un véhicule réside dans le fait que dans cette zone de la carrosserie du véhicule, située sur le côté, l'emboutit est en général est très peu profond, typiquement de l'ordre de 10 à 15 mm.

Dans cette zone - le côté d'habitacle du véhicule, le dispositif d'éclairage et/ou de signalisation lumineuse doit être indexé afin de garantir des jeux et affleurements corrects vis-à-vis de la carrosserie et ainsi assurer une qualité visuelle satisfaisante à l'assemblage du dispositif sur le véhicule.

Or, il est connu que dans une faible profondeur d'emboutit, de l'ordre de 10 à 15 mm, typiquement disponible sur un côté d'habitacle de véhicule, il n'est pas possible de loger un dispositif d'éclairage et/ou de signalisation lumineuse classique, composé d'une glace de feu, d'un boîtier et d'un index de fixation, car un tel ensemble représente au minimum une épaisseur de 25 à 30 mm.

Par commodité, l'expression « modules d'éclairage » seule pourra être utilisée par la suite pour désigner des dispositifs aptes à former des feux de signalisation lumineuse et/ou des feux d'éclairage.

Il est connu du document FR2936752 un procédé de montage d'un dispositif de signalisation et de son support associé sur un élément de carrosserie formant un côté d'habitacle de véhicule. Ce procédé ne permet cependant pas de loger un module d'éclairage dans une portion de carrosserie, formant un côté d'habitacle, présentant un emboutit de faible profondeur.

L'invention vise donc à résoudre ce problème en permettant la suppression du boîtier de dispositif d'éclairage et/ou de signalisation lumineuse dans la zone correspondant au côté d'habitacle du véhicule, afin de permettre un gain en épaisseur et en volume du dispositif d'éclairage et/ou de signalisation lumineuse.

Pour parvenir à ce résultat, la présente invention concerne un dispositif d'éclairage et/ou de signalisation lumineuse d'un véhicule, ledit véhicule présentant un avant, un arrière, deux côtés, une carrosserie dont une partie de carrosserie latérale sur les deux côtés, ledit dispositif comprenant un boîtier et au moins une glace de feu, ladite glace de feu s'étendant au-delà des limites du boîtier pour recouvrir directement une portion de carrosserie latérale, en l'absence de toute partie du boîtier en vis-à-vis de ladite portion de carrosserie latérale, ladite glace de feu comprenant, surmoulé dans ladite glace de feu, un index, de façon à ce que ladite glace de feu et ledit index forment un ensemble monobloc, ledit index présentant une base noyée dans la masse de la glace de feu et une partie de fixation émergeant de la glace de feu, de telle façon que ledit index se trouve en vis-à-vis de ladite portion de carrosserie latérale, ledit index étant configuré pour que la partie de fixation coopère avec un moyen correspondant, tel qu'un trou, aménagé dans ladite portion de carrosserie latérale, pour assurer la fixation de la glace de feu et du dispositif sur la carrosserie du véhicule.

Grâce au dispositif selon l'invention, le dispositif d'éclairage et/ou de signalisation lumineuse loge notamment sur le côté d'habitable peu profondément embouti.

Par ailleurs, selon l'invention, dans la portion de carrosserie considérée, où l'emboutit est de faible profondeur, le boîtier de feu est supprimé, permettant un gain économique.

Enfin, la présence de l'index, dans le dispositif d'éclairage et/ou de signalisation lumineuse selon l'invention, permet une meilleure fixation du dispositif sur la carrosserie, la glace de feu formant avec l'index un ensemble monobloc intrinsèquement isostatique.

Selon un mode de réalisation, la glace de feu est en plastique moulée bi-injectée comprenant deux couches, dont une couche opaque, ledit index étant surmoulé dans ladite couche opaque.

Avantageusement, la couche opaque est de couleur noire.

De préférence, l'index est lui-même en matériau opaque de couleur foncée, typiquement noire, de sorte que ledit index surmoulé dans une couche opaque, typiquement noire, de la glace de feu, ne soit pas aisément visible.

Avantageusement, la glace de feu comprend une couche translucide.

Avantageusement, la couche translucide est de couleur rouge.

Avantageusement, la partie de fixation de l'index est prévue pour émerger du côté opposé à la carrosserie.

Avantageusement, la partie de fixation de l'index présente une forme adaptée pour coopérer avec un trou présentant un diamètre correspondant, aménagé dans ladite portion de carrosserie latérale.

Avantageusement, le dispositif d'éclairage et/ou de signalisation lumineuse selon l'invention forme un dispositif de signalisation lumineuse d'un véhicule automobile.

Avantageusement, le dispositif d'éclairage et/ou de signalisation lumineuse selon l'invention forme un dispositif de signalisation lumineuse d'un véhicule automobile, du côté arrière dudit véhicule automobile.

L'invention concerne également un véhicule automobile comprenant au moins un dispositif d'éclairage et/ou de signalisation lumineuse tel que brièvement décrit ci-dessus.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, le schéma d'une partie de module d'éclairage s'étendant sur un côté d'habitacle d'un véhicule,
- la figure 2, le schéma d'un exemple d'index à surmouler dans une glace de feu, conformément à l'invention,
- la figure 3, le schéma du même exemple d'index, surmoulé dans une couche opaque d'une glace de feu,
- la figure 4, le schéma d'un exemple d'index prévu pour être intégré dans un module d'éclairage, conformément à l'invention,
- la figure 5, la vue schématique d'une portion de module d'éclairage intégrant un index, conformément à l'invention.

Dans ce qui va suivre, les modes de réalisation décrits s'attachent plus particulièrement à une mise en oeuvre du dispositif selon l'invention au sein d'un véhicule automobile. Cependant, toute mise en oeuvre dans un contexte différent, en particulier dans tout type de véhicule, est également visée par la présente invention.

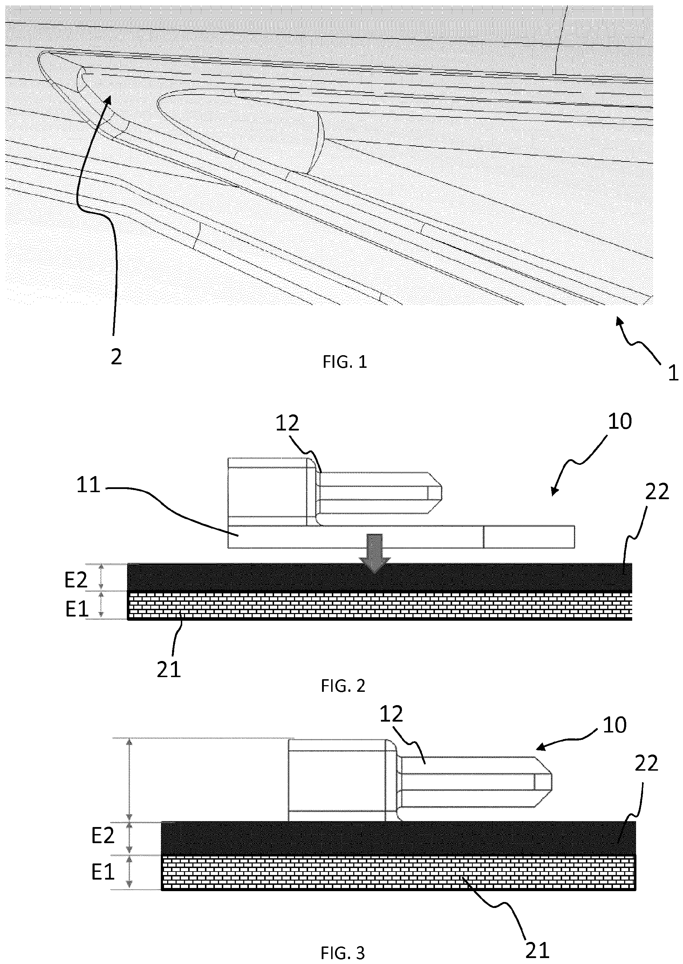

La figure 1 représente schématiquement une portion de carrosserie 1 destinée à recevoir une partie d'un dispositif d'éclairage et/ou de signalisation lumineuse, ci-après un module d'éclairage, s'étendant jusque sur le côté d'un habitacle de véhicule. En particulier, l'extrémité 2 de ladite portion de carrosserie 1 destinée à recevoir une partie d'un module d'éclairage présente une profondeur d'emboutit faible, typiquement de l'ordre de 10 à 15 mm.

Comme indiqué précédemment, dans une telle profondeur d'emboutit, il n'est pas aisé, voire impossible, d'intégrer une portion de module d'éclairage comprenant les éléments classiques que constituent un boîtier et une glace de feu, des sources lumineuses étant agencées dans le boîtier, et la glace de feu comprenant généralement une glace teintée translucide, par exemple une glace rouge pour un module d'éclairage arrière, et une glace opaque noire permettant une délimitation nette d'une partie lumineuse du module d'éclairage, notamment en vue d'obtenir une signature lumineuse souhaitée.

Selon la présente invention, le module d'éclairage ne comprend, dans cette portion de carrosserie latérale 2, où la profondeur d'emboutit est faible, sur le côté d'habitacle du véhicule, que de la glace de feu, à l'exclusion de toute partie de boîtier. Il s'agit par conséquent de s'affranchir, dans cette zone, de toute présence d'une partie du boîtier du module d'éclairage.

En référence à la figure 2, l'épaisseur d'une glace de feu classique, tel qu'une glace de feu de module d'éclairage arrière, bi-injectée avec une couche translucide 21, typiquement rouge, et une partie opaque 22, typiquement noire, est de l'ordre de 5 mm, soit une épaisseur E1 de 2,5 mm pour la couche translucide 21 et une épaisseur E2 de 2,5 mm pour la couche opaque 22.

Selon l'invention, en référence aux figures 2 et 3, un index 10 est ainsi surmoulé dans la glace de feu, ledit index 10 étant destiné à participer à la fixation du module d'éclairage sur la carrosserie du véhicule au niveau de la portion de carrosserie latérale emboutie sur une faible profondeur et supportant une partie dudit module d'éclairage.

Selon un mode de réalisation, l'index 10 est réalisé en ABS.

Selon un mode de réalisation, correspondant aux figures 2 et 3, ledit index 10 est surmoulé dans la couche opaque 22, typiquement de couleur noire, d'une glace de feu bi-injectée, de façon à atténuer la visibilité dudit index 10.

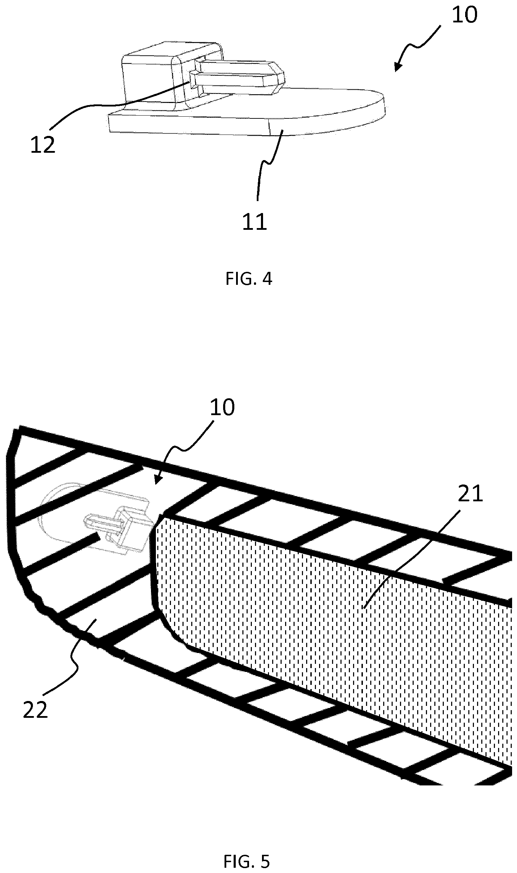

En référence aux figures 3 et 4, l'index 10 comprend ainsi une base 11 noyée dans la masse de la glace de feu, en particulier dans la couche opaque noire 22 d'une glace de feu bi-injectée. L'index 10 comprend par ailleurs une partie de fixation 12 émergeant de la glace de feu, de préférence du côté destiné à se trouver à l'opposé de la carrosserie.

L'index 10 est destiné à coopérer avec un moyen correspondant aménagé dans la carrosserie du véhicule, pour participer à la fixation du module d'éclairage.

Selon un mode de réalisation, la partie de fixation 12 de l'index 10 est en particulier prévue pour se loger dans un trou correspondant, de diamètre adapté, aménagé dans la portion de carrosserie latérale du véhicule, sur le côté d'habitacle, emboutie sur une faible profondeur.

Comme le montre la figure 5, l'index 10 surmoulé dans la glace de feu, en particulier dans la glace de feu noire 22, permet l'indexation du module d'éclairage sur la carrosserie d'un véhicule (non représenté).

L'avantage lié à l'utilisation d'une glace de feu bi-injectée avec une couche translucide 21, par exemple de couleur rouge, permettant d'assurer la fonction d'éclairage et/ou de signalisation, et une couche opaque 22, typiquement de couleur noire, permettant la délimitation d'une signature lumineuse précise, réside dans le fait que l'index 10, surmoulé dans la couche de glace de feu opaque 22 n'est pas aisément visible, puisque masqué par la couche opaque 22, l'index 10 étant lui-même de préférence en ABS de couleur foncée, en particulier de couleur noire.

La présente invention permet en résumé d'obtenir un module d'éclairage comportant un index 10 surmoulé dans la glace de feu, ledit index 10 ainsi intégré permettant la fixation dudit module d'éclairage sur un côté d'habitacle de carrosserie, en l'absence de boîtier du module d'éclairage. Un avantage inhérent réside dans le fait que le module d'éclairage selon l'invention peut être indexé dans une portion de carrosserie emboutie sur une faible profondeur, notamment sur un côté d'habitacle, tout en obtenant, grâce à l'indexation obtenue, une qualité perçue améliorée.

## Revendications

1. Véhicule automobile comprenant un dispositif d'éclairage et/ou de signalisation lumineuse, ledit véhicule présentant un avant, un arrière, deux côtés, une carrosserie dont une partie de carrosserie latérale sur les deux côtés, ledit dispositif comprenant un boîtier et au moins une glace (21, 22), ladite glace (21, 22) s'étendant au-delà des limites du boîtier pour recouvrir directement une portion (2) de carrosserie latérale, en l'absence de toute partie du boîtier en vis-à-vis de ladite portion de carrosserie latérale, ladite glace (21, 22) comprenant, surmoulé dans ladite glace, un index (10), de façon à ce que ladite glace (21, 22) et ledit index (10) forment un ensemble monobloc, ledit index (10) présentant une base (11) noyée dans la masse de la glace (21, 22) et une partie de fixation (12) émergeant de la glace (21, 22), de telle façon que ledit index (10) se trouve en vis-à-vis de ladite portion (2) de carrosserie latérale, ledit index (10) étant configuré pour que la partie de fixation (12) coopère avec un moyen correspondant, aménagé dans ladite portion (2) de carrosserie latérale, pour assurer la fixation de la glace (21, 22) et du dispositif sur la carrosserie du véhicule, dans lequel la glace (21, 22) est en plastique moulée bi-injectée comprenant deux couches, dont une couche opaque (22), ledit index étant surmoulé dans ladite couche opaque (22), et dans lequel la partie de fixation (12) de l'index (10) émerge du côté opposé à la carrosserie.

2. Véhicule selon la revendication précédente, dans lequel la couche opaque (22) est de couleur noire.

3. Véhicule selon l'une des revendications 1 à 2, dans lequel la glace comprend une couche translucide (21).

4. Véhicule selon la revendication précédente, dans lequel la couche translucide (21) est de couleur rouge.

5. Véhicule selon l'une des revendications précédentes, dans lequel la partie de fixation (12) de l'index (10) présente une forme coopérant avec un trou présentant un diamètre correspondant, aménagé dans ladite portion (2) de carrosserie latérale.

6. Véhicule selon la revendication précédente, formant un dispositif de signalisation lumineuse, du côté arrière dudit véhicule automobile.
